# EUROPEAN PATENT SPECIFICATION

(11) **EP 2 064 767 B1**
(45) Date of publication and mention of the grant of the patent: **01.12.2010**
(21) Application number: 07814945.7
(22) Date of filing: 20.09.2007
(51) Int. Cl.: H01M 8/02, H01M 8/10, H01M 8/24, H01M 4/88, H01M 4/86

(54) **PROCESSES. FRAMED MEMBRANES AND MASKS FOR FORMING CATALYST COATED MEMBRANES AND MEMBRANE ELECTRODE ASSEMBLIES**
PROZESSE, GERAHMTE MEMBRANEN UND MASKEN ZUR BILDUNG VON KATALYSATORBESCHICHTETEN MEMBRANEN UND MEMBRANELEKTRODENBAUGRUPPEN
PROCEDES, MEMBRANES ENCADREES, MASQUES DE FORMATION DE MEMBRANES REVETUES PAR CATALYSEUR ET ENSEMBLES ELECTRODES A MEMBRANES

(30) Priority: 22.09.2006 US 534561
(43) Date of publication of application: 03.06.2009
(73) Proprietor: Cabot Corporation, Boston MA 02210-2019 (US)
(72) Inventor: ROMNEY, Gregory, A., Edgewood, NM 87015 (US); RICE, Gordon, L., Albuquerque, NM 87112 (US); MIESEM, Ross, A., Albuqurque, NM 87122 (US); BREWSTER, James, H., Rio Rancho, NM 87144 (US); SCOTT OLIN, Schmeits, Albuquerque, NM 87144 (US); ATANASSOVA, Paolina, Albuquerque, NM 87122 (US)
(74) Representative: Serravalle, Marco
(86) International application number: PCT/US2007/079042
(87) International publication number: WO 2008/036822

(56) References cited:
- JP-A- 63 207 052
- JP-A- 2003 276 353
- JP-A- 2006 108 058
- US-A- 5 547 911
- US-A- 5 847 813
- US-A- 6 074 692
- US-A1- 2002 081 476
- US-A1- 2002 142 205
- US-A1- 2004 241 525
- US-A1- 2006 064 867
- US-A1- 2006 150 398
- US-B1- 6 221 523

## Description

### BACKGROUND OF THE INVENTION

### Field of the Invention

The invention relates to manufacturing of fuel cells. More particularly, the invention relates to a system and method for manufacturing membrane electrode assemblies for direct methanol fuel cells.

### Background Art

Fuel cells.are electrochemical cells that convert reactants, namely fuel and oxidant fluid streams, to generate electric power and reaction products. A broad range of reactants can be used in fuel cells and such reactants may be delivered in gaseous or liquid streams. For example, the fuel stream may be substantially pure hydrogen gas, a gaseous hydrogencontaining reformate stream, or an aqueous alcohol, for example methanol in a direct methanol fuel cell (DMFC). The oxidant may, for example, be substantially pure oxygen or a dilute oxygen stream such as air.

The use of fuel cells to power automobiles is looked upon as a significant step in lessening the dependence on oil, and therefore there is currently a great deal of interest in this technology. Not all fuel cells, however, can be used in automotive applications. For example, DMFC's are better designed for use with small portable electronic equipment. Non-limiting examples of such equipment include includes cellular and satellite phones, small portable music players, handheld personal computing/communicating devices (e.g., PDA, Blackberry®) among other types of devices. DMFC's are useful for these applications because of the high volumetric energy density of the methanol fuel and the potential of DMFC energy source to deliver significant advantages over batteries.

A DMFC fuel cell is one type of solid polymer electrolyte (SPE) fuel cell. A SPE fuel cell typically employs a cation exchange polymer membrane that serves as a physical separator between the anode and cathode while also serving as an electrolyte. In fuel cells, the solid polymer electrolyte membrane typically comprises a perfluorinated sulfonic acid polymer membrane in acid form. Such fuel cells are often referred to as proton exchange membrane or polymer electrolyte membrane (PEM) fuel cells. The membrane is disposed between and in contact with the anode and the cathode. Electrocatalysts in the anode and the cathode typically induce the desired electrochemical reactions and may comprise, for example, a metal black, an alloy and/or a metal catalyst supported on a substrate, e.g., platinum on carbon. SPE fuel cells typically also comprise porous, electrically conductive sheet materials that are in electrical contact with the electrodes, and which permit diffusion of the reactants to the electrodes. The conductive sheet materials may comprise, for example, a porous, conductive sheet material such as carbon fiber paper or carbon cloth. An assembly comprising a membrane, anode and cathode, and diffusion layers for each electrode, is sometimes referred to as a membrane electrode assembly (MEA). Bipolar plates, made of a conductive material and providing flow fields for the reactants, are placed between a number of adjacent MEA's. A number of MEA's and bipolar plates are assembled in this manner to provide a fuel cell stack.

In some MEA's the anode and cathode are formed directly on the membrane through a coating process. A variety of techniques have been developed for manufacturing catalyst coated membranes (CCM's) that apply an electrocatalyst coating solution directly to a membrane. However, the known methods are difficult to employ in high volume manufacturing operations. Known coating techniques such as painting, patch coating and screen printing are typically slow, can cause loss of valuable catalyst and require the application of relatively thick coatings. In addition, known techniques for spraying experience various problems, including, but not limited to, sagging, slumping, drooping, swelling, and other problems associated with excess "wetness" of the membrane. Swelling in particular causes serious problems, and a number of patents have been granted that address this issue. For example, U.S. Patent No. 6,074,692 to Hulett, issued on Jun. 13, 2000 (the '692 patent), describes a method whereby the membrane is pre-swollen by contact with a liquid vehicle (for carrying the catalyst particles) before the electrode forming slurry is applied to the membrane electrolyte. The method described in the '692 patent prevents shrinking by constraining the now swollen membrane in the "x" and "y" directions during drying. In U.S. Patent No. 6,967,038 to O'Brien, issued on Nov. 22, 2005 (the '038 patent), the issue of swelling is addressed by raised relief printing the catalyst coating composition comprising an electrocatalyst and an ion exchange polymer in a liquid medium onto a first surface of an ion exchange membrane. The raised relief printing according to the '038 patent forms at least one electrode layer covering at least a part of said surface of said membrane. According to the '038 patent, a preferred technique for raised relief printing technique is flexographic printing.

US 6,221,523 discloses a membrane electrode assembly for fabricating direct feed fuel cells comprising: a solid electrolyte membrane having a first membrane surface and a second membrane surface, said second membrane surface being positioned on the back side of said first membrane surface; a first catalyst layer directly affixed to said first membrane surface; a second catalyst layer directly affixed to said second membrane surface; a first support substrate positioned on said first membrane surface; and a second support substrate positioned on said second membrane surface.

US 2006/0064867 discloses a method of assembling a membrane electrode assembly (MEA) preassembly, comprising the steps of aligning a first gas diffusion media within a cutout portion of a first gasket on dowel pins of an alignment fixture; placing a MEA in alignment with respect to said first gasket and said first gas diffusion media on said alignment fixture so that one side of the MEA is in contact with said first gas diffusion media; positioning a second gas diffusion media within a cutout portion of a second gasket on the dowel pins of said alignment fixture on the other side of said MEA to provide a gasket assembly.

Thus, a need exists for manufacturing membrane electrode assemblies that is easy and efficient, and does not involve convoluted manufacturing techniques such as a stretching or using flexographic printing of catalyst materials onto the membrane.

### SUMMARY OF THE INVENTION

It is therefore a general object of the invention to provide a membrane electrode assembly manufacturing process that will obviate or minimize problems of the type previously described.

It is a specific object of the invention to provide a membrane electrode assembly that is easy, economical and efficient to manufacture.

It is an object of the present invention to improve the efficiency of a direct methanol fuel cell (DMFC) by providing an improved membrane electrode assembly.

It is an object of the present invention to provide a sprayable catalyst to be used in a membrane electrode assembly for use in a DMFC.

It is an object of the present invention to provide a sprayable catalyst wherein a substantial percentage of a liquid carrier evaporates following spraying of the sprayable catalyst and prior to deposition on a surface of an electrolytic membrane.

It is an object of the present invention to provide a sprayable catalyst that forms a porous surface on the surface of the electrolytic membrane.

It is an object of the present invention to provide a sprayable catalyst wherein when evaporation occurs, and the sprayable catalyst is deposited on the membrane, the substantially spherical particles of catalyst, along with pieces of electrolyte material, form substantially spherical agglomerates that substantially adhere to the surface of the electrolyte membrane.

It is an object of the present invention to provide a sprayable catalyst such that the substantially spherical agglomerates of catalyst and electrolyte material provide a substantially porous surface for the methanol such that hydrogen ions (or hydronium ions) are substantially easily accepted into the electrolyte membrane and electrons from the hydrogen ions can substantially move freely from the hydrogen ions through a circuit to an anode terminal of the DMFC.

It is an object of the present invention to provide a sprayable catalyst such that the substantially spherical agglomerates of catalyst and electrolyte material provide a substantially porous surface for the methanol such that oxygen is substantially easily accepted into the cathode catalyst layer and electrons that flow through the electrical circuit into the cathode terminal of the DMFC move substantially freely and join with the air to form water molecules at the cathode terminal of the DMFC.

It is another object of the present invention to prepare masks for use in applying catalyst to the membrane.

It is another object of the present invention to use the prepared masks in a process for spraying catalyst onto the membrane.

The above described disadvantages are overcome and a number of advantages are realized by a first aspect of the present invention which comprises a framed proton-conducting membrane. The framed proton-conducting membrane preferably comprises a proton-conducting membrane disposed in a rigid frame, and the proton-conducting membrane is preconditioned with a protonating agent. Through a combination of membrane pretreatment and membrane disposition within a rigid frame composed of four or more sides, dimensional stability with regard to membrane swelling is continuously maintained in the x and y dimensions. The frame optionally comprises one or more alignment structures configured to orient the membrane in a reference position relative to one or more automated apparatuses configured to perform one or more operations on the framed membrane. The one or more operations may, for example, be selected from the group consisting of spraying a plurality of catalyst layers on the framed membrane, placing one or more diffusion layers on a catalyst coated membrane, laminating a catalyst coated membrane with one or more diffusion layers, marking or labeling assembled membrane electrode assemblies, cutting one or more assembled membrane electrode assemblies, and placing gaskets on the one or more assembled membrane electrode assemblies. The alignment structure optionally comprises one or more pins, openings (e.g., for receiving alignment pins), an optical alignment device, or a frame edge. The frame optionally comprises an inner edge configured for receiving an outer edge of a mask when in a spraying position, and the mask comprises a sheet of substantially rigid material configured to allow a sprayable catalyst ink to be deposited onto the framed membrane in a first area and to prevent the sprayable catalyst ink from being deposited in a second area.

According to the present invention a process for forming a plurality of membrane electrode assemblies is provided comprising: (a) pre-conditioning a proton-conducting membrane having a first major planar surface and an opposing second major planar surface; (b) framing the membrane in a substantially rigid frame to form a framed membrane; (c) spraying an anode catalyst ink onto the first major planar surface to form an anode catalyst layer thereon; (d) spraying a cathode catalyst ink onto the second major planar surface to form a cathode catalyst layers thereon; (e) aligning a first diffusion layer alignment jig with the first major planar surface of the framed catalyst coated membrane, wherein the first diffusion layer alignment jig comprises a plurality of openings configured for receiving a plurality of first diffusion layers; (f) inserting the plurality of first diffusion layers into the openings; (g) securing the inserted plurality of first diffusion layers to the anode catalyst layer; and (h) removing the first diffusion layer alignment jig. The process optionally further comprises: (i) aligning a second diffusion layer alignment jig with the second major planar surface of the framed catalyst coated membrane, wherein the second diffusion layer alignment jig comprises a plurality of openings configured for receiving a plurality of second diffusion layers; (j) inserting the plurality of second diffusion layers into the openings; (k) securing the inserted plurality of second diffusion layers to the cathode catalyst layer; and (I) removing the second diffusion layer alignment jig. The diffusion layers are adhered with either hot pressing, cold pressing, adhesives, or a combination of all three. The framed proton-conducting membrane optionally is removably secured to a vacuum-controlled platen during the spraying steps and during the securing steps. Optionally, the process further comprises: (m) separating the plurality of membrane electrode assemblies from one another. The process optionally further comprises: (m) post-conditioning the membrane electrode assemblies to render them suitable for use in a fuel cell, wherein the post-conditioning comprises bathing the proton-conducting membranes in a first bath comprising either both water at an elevated temperature and an acid, water at an elevated temperature, or an acid. Optionally, the process is automated. Steps (f) and (j) optionally are performed by a pick-and-place robot, and the step of preconditioning optionally comprises bathing the membrane electrode assemblies at an elevated temperature in a first bath comprising either both water at an elevated temperature and an acid, water at an elevated temperature, or an acid.

### BRIEF DESCRIPTION OF THE DRAWINGS

The novel features and advantages of the present invention will best be understood by reference to the detailed description of the preferred embodiments which follows, when read in conjunction with the accompanying drawings, in which:
FIG. 1 is a simplified block diagram of a direct methanol fuel cell (DMFC) according to an embodiment of the present invention;
FIG. 2 is a flow diagram of a process for manufacturing a membrane electrode assembly for use in a DMFC according to an embodiment of the present invention;
FIGS. 3A, 3B and 3C illustrate a detailed flow diagram of a process for manufacturing a membrane electrode assembly for use in a DMFC according to an embodiment of the present invention;
FIG. 4 illustrates a pattern for spraying one or more catalyst inks on a membrane for use in forming a membrane electrode assembly according to an embodiment of the present invention;
FIGS. 5A-5E illustrate spraying of sprayable catalyst ink, e.g., anode or cathode ink, on a membrane using a spraying nozzle according to an embodiment of the present invention;
FIG. 6 illustrates a carbon-supported catalyst droplet subsequent to spraying according to known methods;
FIG. 7 is a side view of a fixture for manufacturing one or more membrane electrode assemblies comprising a mask, frame, and platen according to an embodiment of the present invention;
FIG. 8 is a top view of the fixture for manufacturing membrane electrode assembly shown in FIG. 7;
FIG. 9 is a top view of a first embodiment of a mask for applying catalyst ink on a membrane to form a membrane electrode assembly according to an embodiment of the present invention;
FIG. 10A is a top view of a second embodiment of a mask for applying catalyst ink on a membrane to form a membrane electrode assembly according to an embodiment of the present invention; FIG. 10B is a bottom perspective view of the mask shown in FIG. 10A; FIG. 10C is a cross sectional view along line AA of the mask shown in FIG. 10A; FIG. 10D is a top view of a third embodiment of a mask for applying catalyst ink on a membrane to form a membrane electrode assembly according to an embodiment of the present invention;
FIGS. 11A-C illustrate resulting catalyst layers on the surface of a membrane following use of the masks shown in FIGS. 9, 10A, and 10D, respectively, when spraying catalyst ink onto a membrane according to an embodiment of the present invention;
FIG. 12 is a top view of a diffusion layer alignment jig according to an embodiment of the present invention;
FIGS. 13A-C illustrate several steps in the installation of a diffusion layer alignment jig onto a catalyst coated membrane located on a fixture for manufacturing one or more membrane electrode assemblies according to an embodiment of the present invention;
FIG. 14A is a top view of the fixture shown in FIG. 13C, following insertion of diffusion layers according to an embodiment of the present invention; FIG. 14B is a top perspective view of the fixture shown in FIG. 13C, illustrating insertion of diffusion layers into the diffusion layer alignment jig that is placed on top of the catalyst coated membrane according to an embodiment of the present invention;
FIG. 15 is a side view of the fixture shown in FIG. 14A along with a diffusion material press for pressing diffusion layers onto the catalyst coated membrane according to an embodiment of the present invention; and
FIG. 16 is a bottom perspective view of the diffusion material press shown in FIG. 15 illustrating a plurality of press blocks that press diffusion layers onto the catalyst coated membrane according to an embodiment of the present invention.

### DETAILED DESCRIPTION OF THE PREFERRED EMBODIMENT(S)

The various features of the preferred embodiment(s) will now be described with reference to the drawing figures, in which like parts are identified with the same reference characters. The following description of the presently contemplated preferred embodiments of practicing the invention are not to be taken in a limiting sense, but are provided merely for the purpose of describing the general principles of the invention.

### Introduction

The present invention comprises a system and method for manufacturing membrane electrode assemblies (MEA's). MEA's are used in fuel cells, and in this particular application, in direct methanol fuel cells (DMFC's). An MEA comprises a catalyst coated membrane (CCM) disposed between two diffusion layers. A CCM comprises an electrolytic membrane, in a preferred embodiment, a sulfonated tetrafluoroethylene copolymer such as NAFION®, having opposing major planar surfaces, an anode catalyst layer disposed on a first major planar surface, and a cathode catalyst layer disposed on a second major planar surface (catalyst layers may be applied in either order). According to several aspects of the present invention, the catalyst layers are formed on the major planar surfaces of the electrolytic membrane, preferably through a spraying process. The catalyst layers are preferably substantially porous and electrically conductive. The diffusion layers also preferably are electrically conductive and allow for the flow of reactants toward the catalyst layers and the removal of reaction products away from the catalyst layers.

How the catalyst layers are formed on the electrolytic membrane may substantially impact the efficiency and usefulness of the DMFC. According to an embodiment of the present invention, either or both catalyst layers are formed from a sprayable catalyst ink comprising catalyst aggregates, preferably having an average size of from about 0.5µm to about 20µm, e.g., from about 0.7 µm to about 15 µm or from about 1 µm to about 10 µm, a liquid vehicle and optionally electrolytic particles (e.g., NAFION® particles). According to a preferred embodiment of the present invention, the liquid vehicle comprises, consists essential of, or consists of water. The sprayable ink preferably is dispelled from a spraying mechanism (e.g., "sprayed"), to form an aerosol comprising a plurality of droplets, the droplets preferably having an average droplet size of from about 10 µm to about 100 µm, e.g., from about 20 µm to about 70µm or from about 30µm to about 50µm, preferably about 40 µm. Before, during and/or after droplet formation, substantially spherical agglomerates of catalyst and, if present, electrolytic particles, e.g., NAFION®, are formed. As the agglomerates hit the membrane surface and are heated, they mesh with each other, forming a catalyst layer (which optionally includes NAFION®) that desirably is substantially porous. The steps of spraying and heating can be repeated numerous times, to create catalyst layers of any desired thickness. The substantially spherical agglomerates cause the catalyst layer to be substantially porous, thereby improving the efficiency of the electrochemical reactions occurring at the interface between the cathode catalyst layer and the membrane and the interface between the anode catalyst layer and the membrane.

Porosity, as is understood by those of ordinary skill in the art of the present invention, describes how densely a certain material is packed. Porosity can be defined by the amount of non-solid volume to the total volume of a material, although as one of ordinary skill in the art knows, other definitions exist. Porosity (Φ) can be defined, for example, by the following ratio: 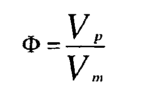 wherein V*ₚ* is the non-solid volume (pores and liquid) and V*ₘ* is the total volume of material, including the solid and non-solid parts. According to this ratio, the porosity value is a fraction, between 0 and 1, with porosity increasing as the value approaches 1. According to an exemplary embodiment of the present invention, the catalyst layer has a porosity in the range of from about 0.20 to about 0.60, e.g., from about 0.30 to about 0.55 or from about 0.40 to about 0.50.

In a preferred aspect of the invention, prior to any steps of spraying, heating, or as described below, pre- and post-conditioning, the membrane is applied to a frame. The frame has several unique characteristics that assist in manufacturing membrane electrode assemblies of nearly any desired shape, optionally autonomously, and with little effort (e.g., manually or via fully automated software and computer controlled machines). Frames are preferably rigid and comprise alignment structures. The alignment structures can be one or more alignment pins or alignment holes (e.g., for receiving alignment pins), of any size or shape, or can be an optically reflective or transmittable material or device. The alignment structures provide positioning information useful for aligning the framed membrane with the manufacturing device or machine (e.g., platen, catalyst spraying equipment, diffusion layer mounting apparatus, etc.) so that during the manufacturing process, the manufacturing device or machine is capable of positionally performing an appropriate process on a desired region of the framed membrane. That is, the alignment structures provide a means whereby the position of the framed membrane is "known" relative to the manufacturing device or machine, such that the manufacturing device or machine is capable of directing the appropriate process to the appropriate location on the framed membrane. The alignment structures also optionally provide positioning information for one or more masks, described below, that may be implemented in the MEA manufacturing process. For example, in one aspect, the outer edge of a mask is aligned with the inner edge of the frame. In this manner, the inner edge of the frame acts as an alignment structure for receiving the outer edge (a second alignment structure) of the mask, thereby positioning the mask in a desired position relative to the membrane that is fixed within the frame.

Further still, the framed membrane can, as an assembly, be removably attached to a platen. A platen provides a firm fixture for the framed membrane, and preferably includes alignment structures such as fiducials, guide holes, and/or other indicia that are used by the manufacturing device or machine (e.g., catalyst spraying equipment, diffusion layer mounting apparatus, etc.) to locate the membrane and determine a substantially exact position over it. According to a preferred embodiment of the present invention, the framed membrane is removably secured to the platen is via vacuum means.

Further, the present invention optionally comprises pre-conditioning of the membrane prior to application of the catalyst layers. Additionally or alternatively, the present invention optionally comprises post-conditioning of the MEA, for example, following final assembly. Pre-conditioning provides the benefit of increasing the stability of the membrane, particularly during catalyst ink spraying, and post-conditioning provides the benefit of activating the membrane electrode assemblies prior to insertion into DMFC's, thereby shortening the period of time until they are fully activated and capable of generating power.

According to another embodiment of the present invention, masks are employed in a process for forming a CCM and/or an MEA. Masks may be used, for example, to define an area or region on an electrolyte membrane that is to be sprayed with a sprayable catalyst-containing ink to form one or more CCM's, much like a stencil. In this manner, the masks are used as guides for spraying the sprayable catalyst-containing ink onto an electrolyte membrane. If the process employs multiple sprayable inks, one or more than one mask may be employed as each respective layer is formed from the multiple inks.

### Direct Methanol Fuel Cells (DMFC's)

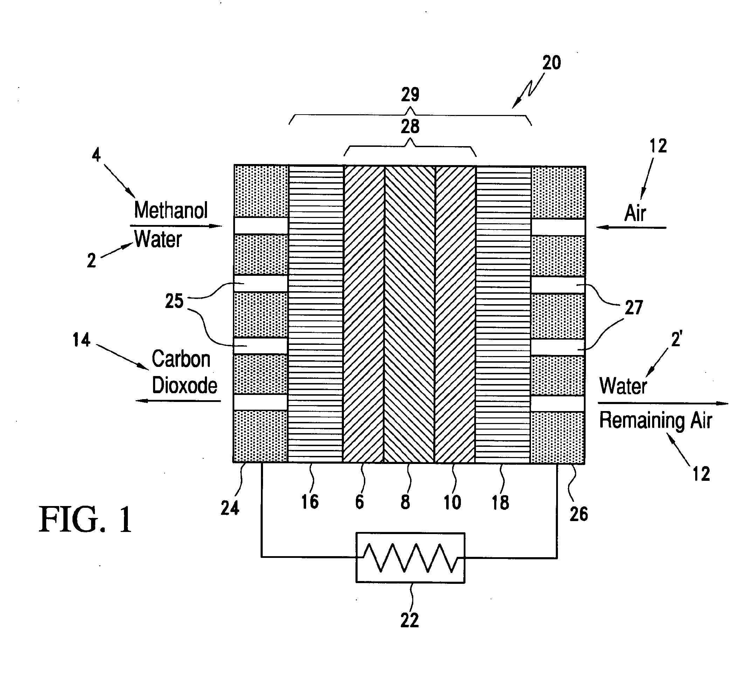

FIG. 1 is a simplified diagram of a DMFC 20 (not to scale) that comprises an MEA 29. MEA 29 comprises a CCM 28 and two diffusion layers 16, 18 disposed on the opposite sides thereof, respectively. Bipolar plates 24 and 26 are disposed between the anode and cathode of sequential MEA stacks and comprise current collectors and flow fields, 25 and 27, for directing the flow of incoming reactant fluid to the appropriate electrode. Two end plates (not shown), similar to the bipolar plates, are used to complete the fuel cell stack.

CCM 28 comprises an electrolytic membrane 8 having opposing major planar surfaces and catalyst layers disposed on each of the opposing major planar surfaces, respectively, and which may be formed, for example, from one or more sprayable catalyst-containing inks according to an embodiment of the present invention. Specifically, a first catalyst layer (anode 6) is formed, e.g., through spraying of a first catalyst-containing ink, on a first major planar surface of the electrolytic membrane 8, and a second catalyst layer (cathode 10) is formed, e.g., through spraying of a second catalyst-containing ink, on a second major planar surface of the electrolytic membrane 8.

As shown in FIG. 1, during operation, a fuel comprising methanol 4 in solution with water 2 is fed to the anode 6 side of the MEA. The solution of methanol 4 and water 2 is applied to anode 6 through bipolar plate 24 and liquid diffusion layer (LDL) 16, which is designed to spread methanol 4 across anode 6 as evenly and completely as possible. As the methanol 4 is oxidized at anode 6, carbon dioxide 14 is formed, which is efficiently and effectively channeled through LDL 16 and bipolar plate 24 and liberated to the environment. Protons, which are also formed in the oxidation reaction, are then transported (typically as hydronium ions) through the electrolytic membrane 8 to cathode 10, where the previously stripped electrons, having completed the path through external load/circuit 22, rejoin and react with oxygen from air 12, to form water 2', which is then carried away from the fuel cell with any remaining air via gas diffusion layer (GDL) 18 and bipolar plate 26. GDL 18 is designed to efficiently and effectively channel water away (as water vapor) that forms at cathode 10, along with any remaining air 12. DMFC's are further described in pending U.S. Patent Application Serial No. 10/417,417, filed April 16, 2003, the entirety of which is incorporated herein by reference.

### General Flow Diagram of a Method for Manufacturing MEA's

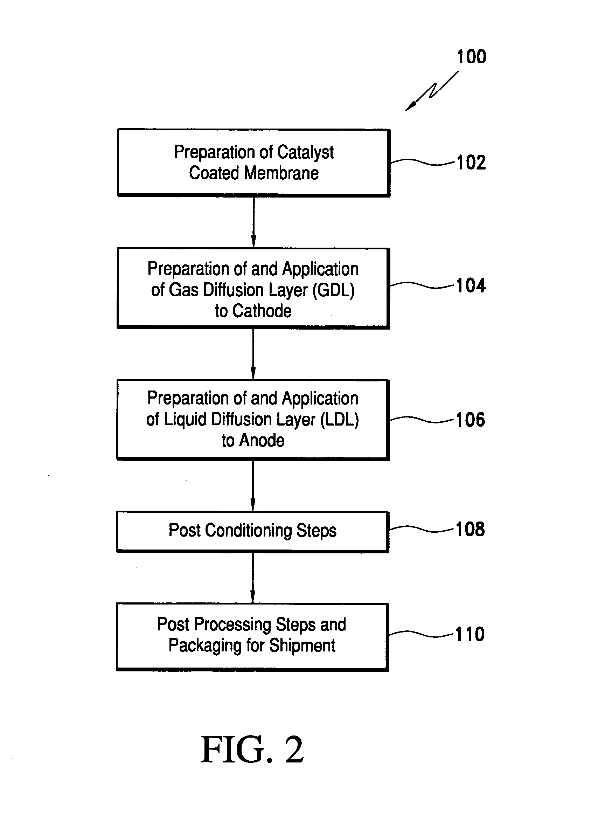

FIG. 2 is a flow diagram of a process 100 for manufacturing MEA's, preferably for use in DMFC's, according to an embodiment of the present invention. FIG. 2 represents a summary of the specific manufacturing steps for the production of membrane electrode assemblies according to an embodiment of the present invention.

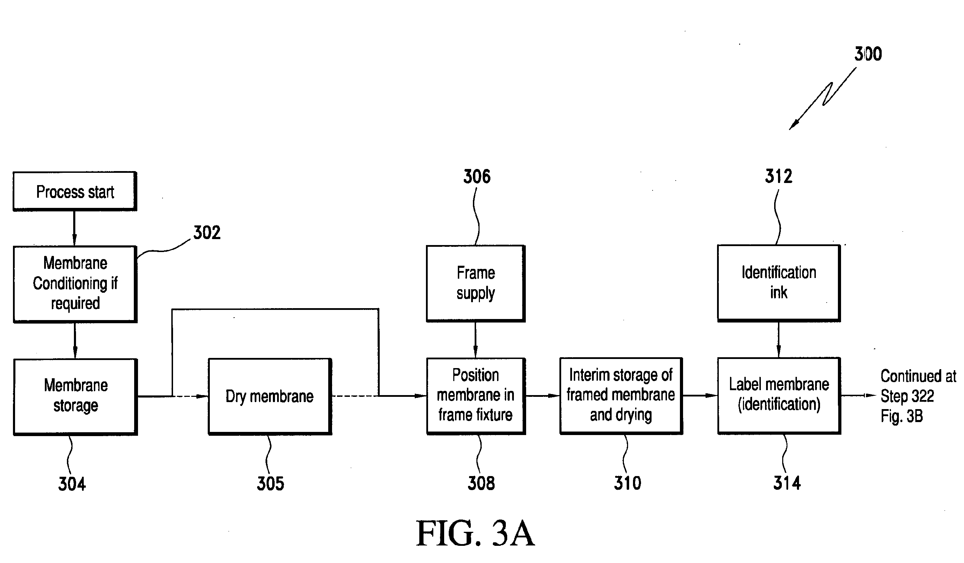

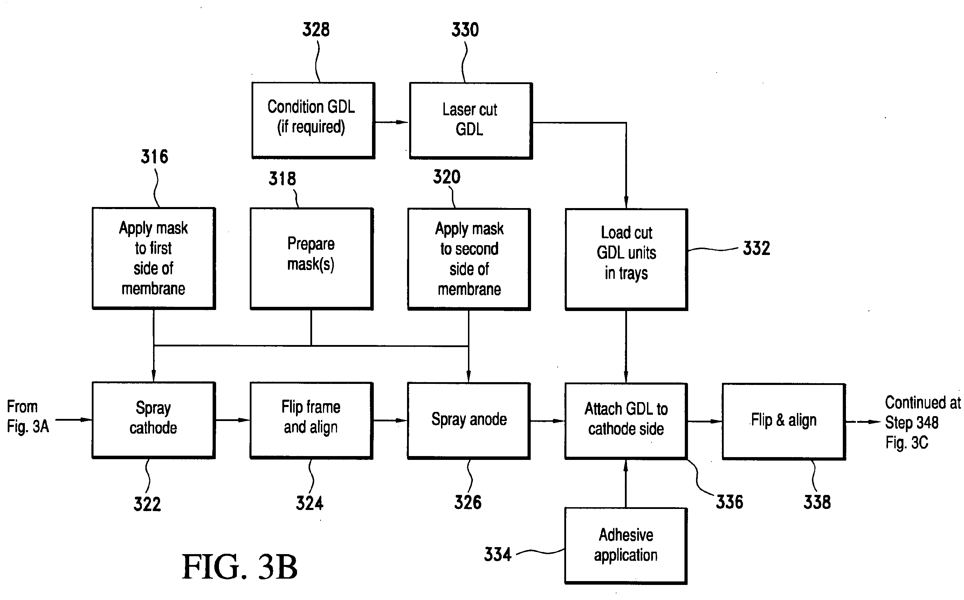

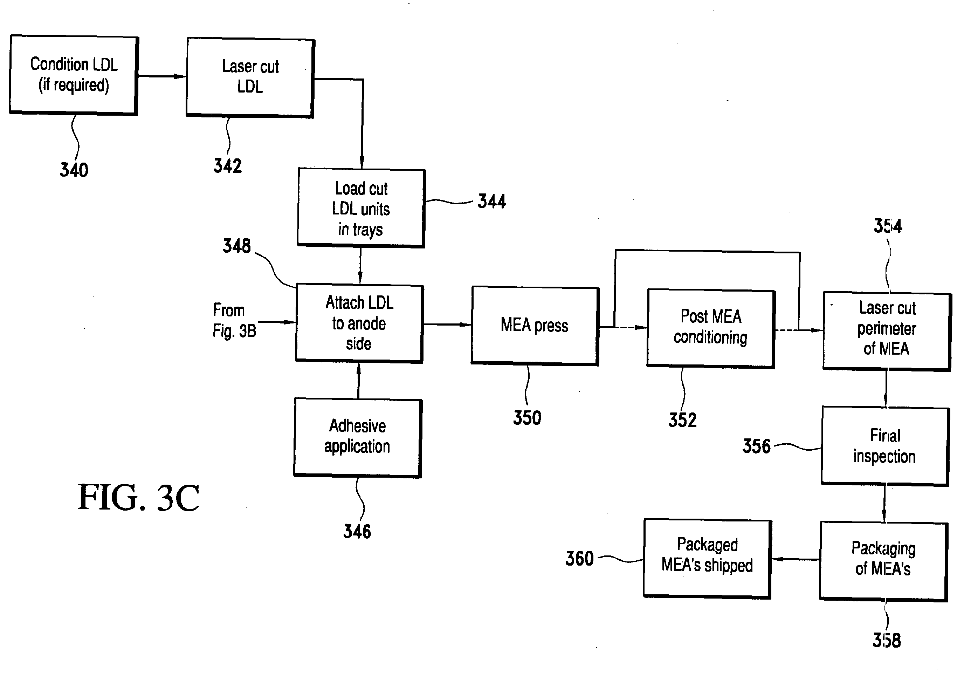

The method for manufacturing MEA's for use in DMFC's according to an embodiment of the present invention comprises four major steps. In step 102, membrane 8 is prepared for the application of cathode layer 10 and anode layer 6, though, as one of ordinary skill in the art can appreciate, the layers do not necessarily have to be applied in that particular order. Membrane 8, as is well known to those of ordinary skill in the art of the present invention, comprises an electrolytic material, which, in a preferred embodiment, comprises a sulfonated tetrafluoroethylene copolymer such as NAFION®. The anode and cathode layers 6, 10 are formed on the opposing major planar surfaces of the membrane using a sprayable catalyst-containing ink according to an embodiment of the present invention. The sprayable catalyst-containing ink, or fluid, comprises anodic or cathodic catalyst particles (depending on which layer that is being applied), a vehicle (e.g., water), and preferably electrolyte, e.g., NAFION®, particles. The sprayable catalyst-containing ink, and the method for applying same, according to several embodiments of the present invention, are discussed in greater detail below. After application of the anode catalyst and cathode catalyst, the assembly is referred to as a catalyst coated membrane (CCM) 28. Step 102 of method 100 illustrated in FIG. 2 generally corresponds to steps 302 through 326 of method 300, illustrated in FIG. 3.

Following the preparation of membrane 8, and the application of the anode and cathode layers in step 102, the diffusion layers 18, 16 are prepared and applied to the CCM 28 in steps 104, 106 respectively. According to a preferred embodiment of the present invention, the fuel cell is a direct methanol fuel cell (DMFC) 20, wherein a methanol-containing fuel is applied to the anode in a liquid state, as shown in FIG. 1. As shown, step 104 comprises preparation of an application of a gas diffusion layer (GDL) to the cathode 10. Step 104 of method 100 illustrated in FIG. 2 generally corresponds to steps 328 through 338 of method 300, illustrated in FIG. 3.

In the sequence shown in FIG. 2, following step 104, wherein GDL 18 is prepared and applied to cathode 10, a liquid diffusion layer (LDL) 16 is prepared and applied to anode 6 in step 106. Step 106 of method 100 illustrated in FIG. 2 generally corresponds to steps 340 through 348 of method 300, illustrated in FIG. 3. In step 108, post-conditioning steps are performed. Although the GDL 18 and LDL 16 are applied in steps 104, 106 of method 100, the post-conditioning process is generally applicable to the CCM 28, i.e., the membrane 8 coated with an anode catalyst and a cathode catalyst. The post-conditioning step assists in cleaning or removal of potential contaminates from the CCM 28 preferably such that it is ready to react with the fuel and generate electricity. Pre-activation refers to the process of hydrating the membrane and catalyst layers. Due to the drying nature of printing steps, the membrane can be rehydrated prior to delivery. If the catalyst coated membrane 28 is not preactivated, then following installation into a fuel cell assembly, the CCM 28 will need to be activated, which may undesirably require extended down time (activation time). Post-conditioning cuts down and/or substantially eliminates the activation time following final assembly of the DMFC 20. The process for post-conditioning is described in greater detail below. Step 108 of method 100 illustrated in FIG. 2 generally corresponds to step 352 of method 300, illustrated in FIG. 3.

Following step 108, in which post-conditioning occurs to CCM's 28, post-processing and packing step 110 may be implemented. Following post-processing and packaging, the MEA's 29 may be ready for shipping. Step 110 of method 100 illustrated in FIG. 2 generally corresponds to step 350, and steps 354 through 358 of method 300, illustrated in FIG. 3.

### Detailed Flow Diagram for Manufacturing MEA's

FIGS. 3A, 3B and 3C illustrate a detailed non-limiting flow diagram of a process for manufacturing a CCM 28 and a MEA 29 for use in a DMFC according to an embodiment of the present invention. Method 300 for the manufacture of MEA 29 begins with step 302 wherein electrolytic membrane 8 is pre-conditioned. Membrane 8 can also be referred to as a proton-conducting membrane. Membrane 8 comprises a first major planar surface on a first side, and a second major planar surface on a second side opposite the first side.

According to a preferred embodiment of the present invention, membrane 8 is fabricated from and hence comprises a sulfonated tetrafluoroethylene copolymer such as NAFION®. According to a preferred embodiment of the present invention, membrane 8 is pre-conditioned by bathing membrane 8 in a bath comprising water at an elevated temperature and an acid, or water (without acid) at an elevated temperature, or an acid. Preferably, membrane 8 is pre-conditioned with a protonating agent. A protonating agent may be regarded as any type of acidic solution. The process of pre-conditioning improves the stability of membrane 8 and substantially inhibits wrinkling from occurring during or after subsequent spraying steps, described below. In optional step 304, conditioned membrane 8 is stored. According to a preferred embodiment of the present invention, membrane 8 is stored wet in a substantially pure deionized (DI) water storage container. Shown in FIG. 3A is optional step 305 of drying conditioned membrane 8. Preferably, however, conditioned membrane 8 is stored wet, and then removably secured to a membrane frame assembly (frame) 60, to form a framed membrane.

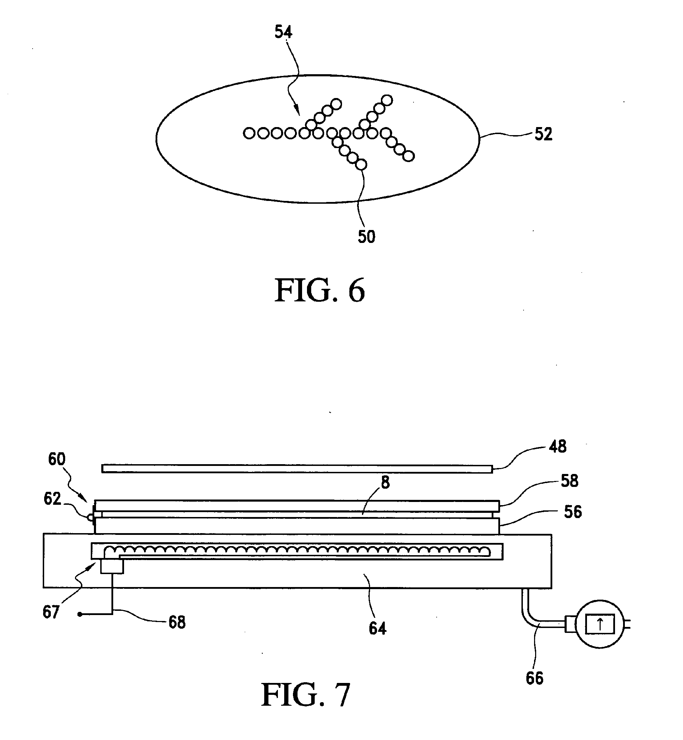

With continued reference to FIG. 3 (as well as FIG. 7), Frame 60 is optionally retrieved from a frame supply in step 306, and the wet pre-conditioned membrane 8 is loaded onto and secured to frame 60 in step 308. Alternatively, membrane 8 is inserted in frame 60 prior to the preconditioning step (step 302). According to an exemplary embodiment, frame 60 is square or rectangular in shape, e.g., about 16 x 20 inches, and rests upon platen 64. Frame 60 preferably holds membrane 8 substantially rigid in both the x and y directions, in order to inhibit wrinkling and/or stretching, especially during subsequent spraying operations, discussed below.

According to a preferred embodiment of the present invention, frame 60, which is preferably a substantially rigid structure, comprises one or more alignment structures configured to orient frame 60 and membrane 8 in a reference position relative to one or more devices or machines, e.g., automated apparatuses, configured to perform one or more operations on framed membrane 8. According to a preferred embodiment of the present invention, the alignment structure comprises a pin or peg, a pin or peg hole (e.g., for receiving an alignment pin or peg), an optical alignment device, or a frame edge. The alignment structures assist automated manufacturing equipment in precisely locating the frame and membrane 8 such that precise application of sprayed catalyst materials can occur, as well as many different other operations. Preferably, the automated manufacturing equipment comprises software driven-computer controlled automated manufacturing equipment (which optionally includes "pick-and-place" equipment) that utilizes the alignment structures to repeatably and precisely perform various operations on membrane 8 during the MEA manufacturing process. Another benefit of the software-driven-computer controlled manufacturing equipment is that changes to the designs of MEA's can literally be made "on-the-fly", from one MEA to another, with substantially little or no "down time" in the manufacturing process, other than re-loading of different supplies (if necessary) and minimal software design modification.

As discussed above, various operations can be performed by the software-driven-computer controlled manufacturing equipment. According to a preferred embodiment of the present invention, these operations may comprise, for example, one or more of the following: spraying of one or a plurality of catalyst layers on the framed membrane 8, pacing one or more diffusion layers on a catalyst coated membrane 8, laminating a catalyst coated membrane 8 with one or more diffusion layers, marking or labeling assembled membrane electrode assemblies, cutting one or more assembled membrane electrode assemblies, and placing gaskets on the one or more assembled membrane electrode assemblies. These steps are described in greater detail below.

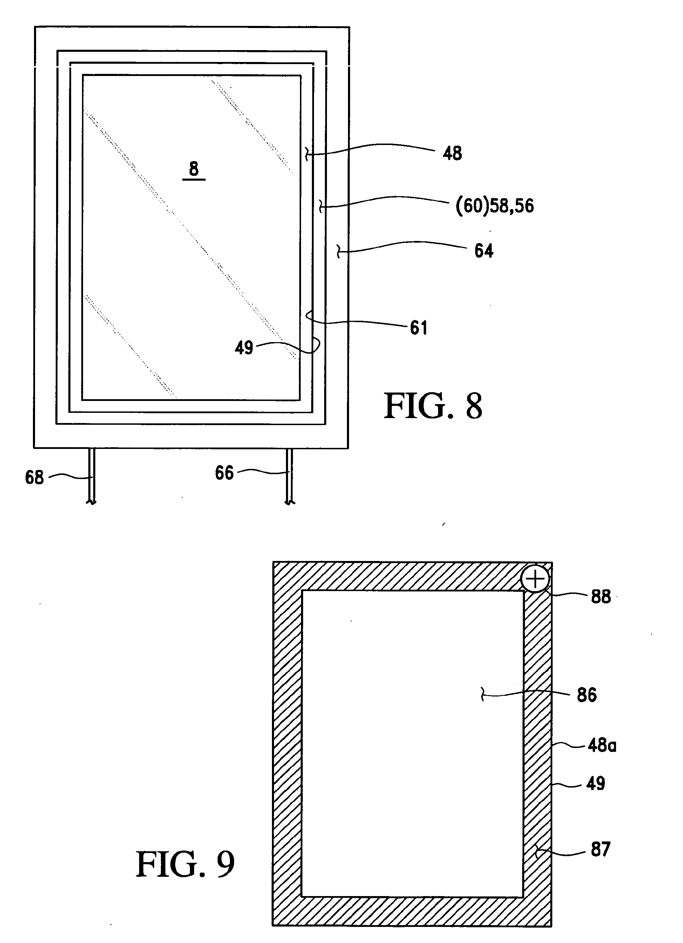

According to an embodiment of the present invention, frame 60 comprises an inner edge 61 (see FIG. 8) configured for receiving a mask outer edge 49 when in a spraying position. As discussed in greater detail below, mask 48 (whether for forming cathode catalyst layer, anode catalyst layer, or both), preferably comprises a sheet of substantially rigid material configured to allow a sprayable catalyst ink to be deposited onto the framed membrane in a first area and to prevent the sprayable catalyst ink from being deposited in a second area. In one embodiment a single mask is used for the spraying of both the anode catalyst layer and the cathode catalyst layer. In another embodiment, two different masks are used to form the anode catalyst layer and cathode catalyst layer, respectively.

Platen 64, shown in FIG. 7, is a flat fixture that provides a vacuum and optionally heating functions to removably secure and heat (respectively) frame 60 (and membrane 8 secured within frame 60). According to a preferred embodiment of the present invention, the framed electrolytic membrane 8 is configured for being removably secured to vacuum-controlled platen 64 by a vacuum or other mechanical means. As discussed below, vacuum controlled platen 64 can removably secure frame 60 to itself during many different operations, including, but not limited to, the steps of spraying, securing, placing of the diffusion layers, laminating, marking or labeling, cutting, among others.

Reverting to FIG. 3A, in optional step 310, framed membrane 8 is put into interim storage and dried. The interim storage and drying chamber, according to an exemplary embodiment of the present invention, dries the conditioned membrane 8 at, e.g., about 70°C for about fifteen minutes. Other drying temperatures and drying times can also be used.

In optional step 312, identification ink is retrieved, and in optional step 314, membrane 8 or frame 60 is labeled using the identification ink. The label can comprise a unique identification number and/or barcode that can be applied via an inkjet or other printing process.

At this point in the manufacturing process, membrane 8 is ready for formation of the cathode and anode catalyst layers. According to an exemplary embodiment of the present invention, membrane 8 has preferably been pre-conditioned with either a hot-water and acid bath, a hot water bath, or just an acid bath, or according to still another method, via hydrogen peroxide, sulfuric acid and distilled water baths, and has been positioned on frame 60 that is preferably removably secured to platen 64 by a vacuum. Platen 64 provides a firm fixture for membrane 8, and preferably includes fiducials, pins, pegs, guide holes, and/or other indicia that may be used by the catalyst spraying equipment (as well as other equipment used to form the MEA) to locate membrane 8 and determine a substantially exact position over it. Therefore, the anode and cathode layers 6, 8 can be applied onto membrane 8 substantially precisely, such as to within, according to an exemplary embodiment of the present invention, ± about 1 mm, ± about 0.5 mm or ± about 0.2 mm.

In step 318, cathode mask and anode mask are designed and prepared. Masks can be prepared using a variety of machining techniques, e.g., water cutting, laser cutting, and other standard machining techniques. Cathode mask and anode mask can be formed from a wide variety of materials, such as, for example, stainless steels, low VOC plastics, or aluminums. In some fuel cell designs, anode mask will be the same as or a mirror image of cathode mask, and in other designs, anode mask will be different. In some embodiments, multiple cathode masks and/or multiple anode masks may be employed, for example, to form a cathode catalyst layer and/or an anode catalyst layer having a catalyst gradient or an electrolyte (e.g., NAFION®) gradient (i.e., in the x, y and/or z directions).

In step 316, a mask is applied to a first surface of framed membrane 8, and in step 320, a mask (same or different from the mask used in step 316) is applied to a second surface of framed membrane 8. Prior to each of steps 316 and 320, platen 64 and framed membrane 8, which is removably secured thereto, are preferably heated to a temperature of from about 50°C to about 100°C, e.g., from about 60°C to about 80°C, preferably about 70°C. Heating of platen 64 and membrane 8 prior to and during spraying of the catalyst-containing ink(s) desirably facilitates vehicle removal and formation of highly porous catalyst layers on the first and second surfaces of membrane 8.

The purpose of cathode mask is to allow a sprayable cathode catalyst-containing ink to be deposited onto a first surface of a membrane in a first area (or pattern) and to substantially prevent the sprayable cathode catalyst-containing ink from being deposited in a second area. Similarly, the purpose of anode mask is to allow a sprayable anode catalyst-containing ink to be deposited onto a second surface of the membrane in a third area (or pattern) and to substantially prevent the sprayable anode catalyst-containing ink from being deposited in a fourth area. Optionally, the first area is substantially the same pattern as the third area, and the second area is substantially the same pattern as the fourth pattern. In another aspect, the first area is the negative or inverse of the third area, and the second area is the negative or inverse of the fourth pattern. In still another aspect, the pattern of the first area is unrelated to the pattern of the third area, and the pattern of the second area is unrelated to the pattern of the fourth area. As discussed below, masks can be very simple in design (e.g., a single large open area, with a border portion), or can have nearly any imaginable design to create, for example, localized gradients of catalyst material as desired.

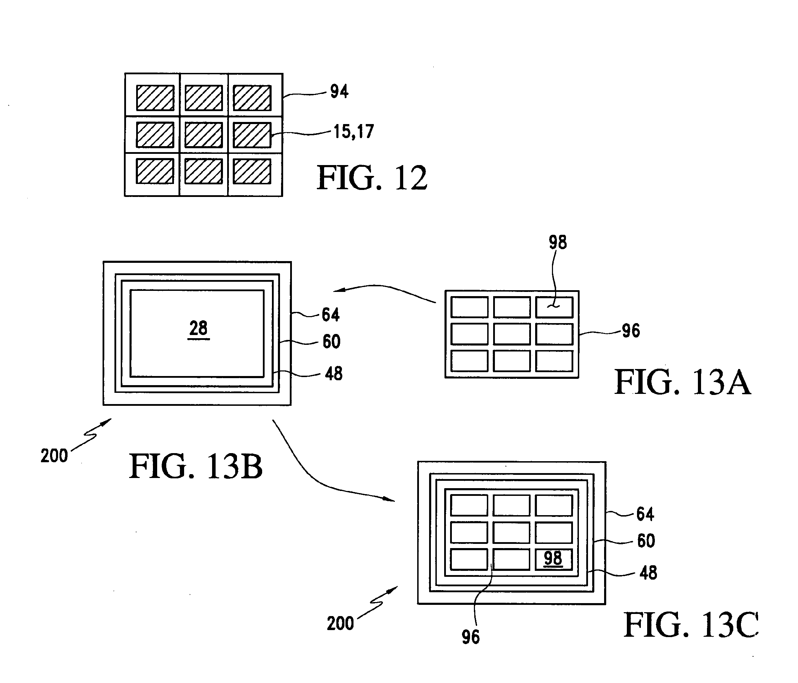

In another embodiment, for example where multiple CCM's are formed in a batch process, the mask resembles the diffusion layer alignment jig 96 shown in FIG. 13A (and discussed in more detail below). In this aspect, the mask comprises a plurality of openings (much like openings 98 in jig 96), each opening defining a separate CCM. As the catalyst ink is sprayed, multiple CCM's can be formed simultaneously.

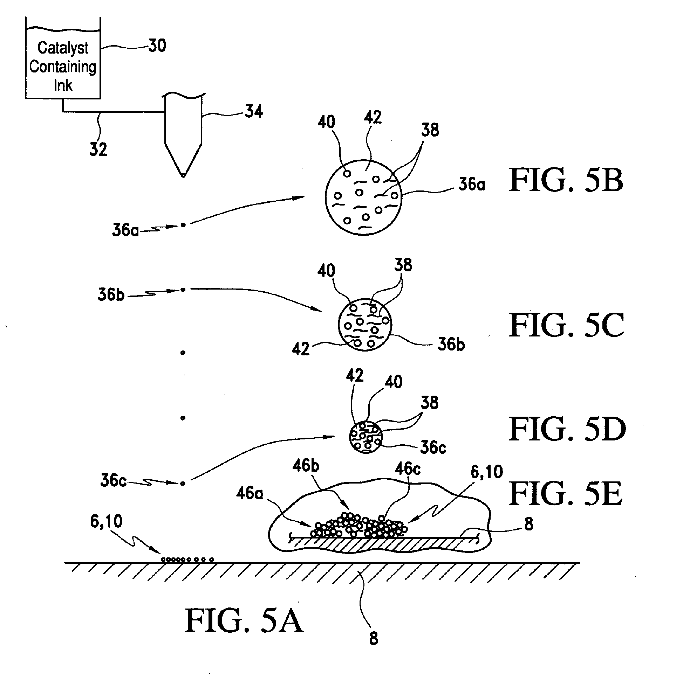

FIG. 9 illustrates a top view of a simple mask 48a, which may be employed during the spraying of a catalyst ink onto electrolytic membrane 8 (e.g., on the first or opposing second side thereof). Mask 48a is preferably formed from a substantially rigid material. To manufacture mask 48a, a sheet of the substantially hard rigid material, optionally having a thickness of from about 1 to about 10 mm, e.g., from about 2 to about 7 mm, is placed in a laser cutter and a rectangle or square piece is cut away from the interior portion, forming ablated area 86. Ablated area 86 is the area within which catalyst-containing ink 72 will be sprayed and deposited by spray nozzle 34 (see FIG. 5). Mask 48a has an outer edge 49, which optionally is designed so as to be received within the inner edge 61 of a frame 60 (shown in FIG. 8), which holds the electrolytic membrane 8. Solid mask area 87 is an area that prevents catalyst-containing ink 72 from reaching or being deposited onto membrane 8. As one of ordinary skill in the art can appreciate, however, many different sizes and shapes of masks 48 can be used according to an embodiment of the present invention. One of the benefits of automating the MEA manufacturing process is that with simple software changes, different sizes and shapes of MEA's (and, accordingly, CCM's and DMFC's) can be manufactured with very little or no tooling changes. Since substantially all the manufacturing steps are implemented by computer-controlled machines, all that is required is that the appropriate materials be obtained, and the necessary changes (e.g., software manufacturing parameters) be provided to the controllers.

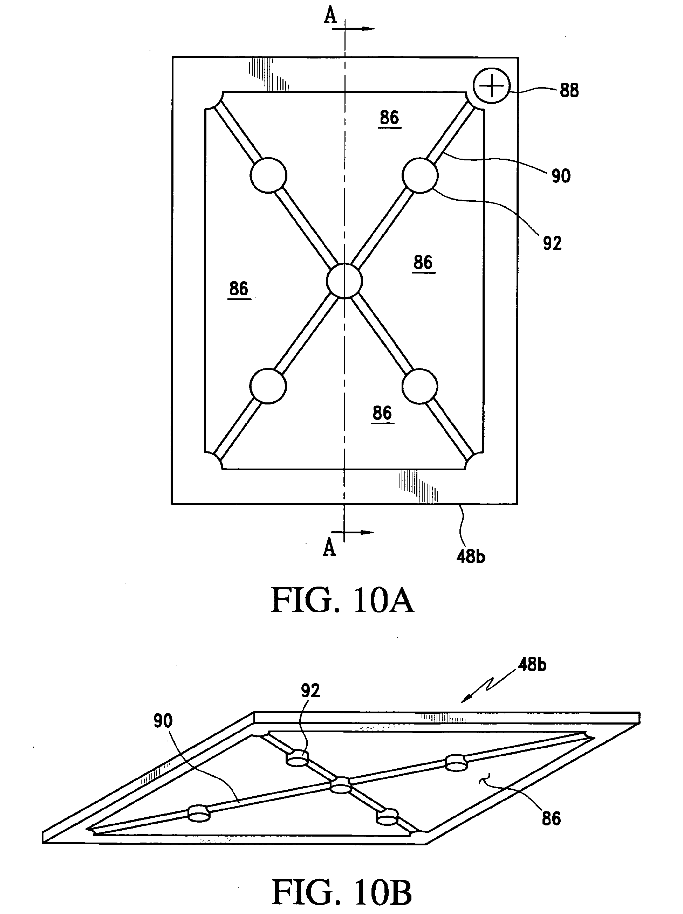

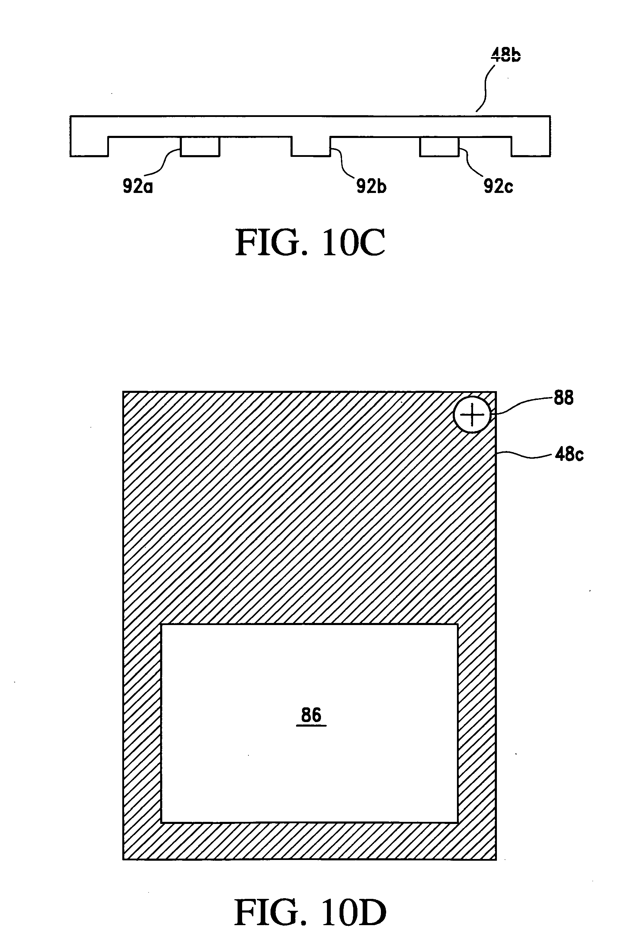

A further non-limiting example of a mask 48b is shown in FIGS. 10A-C. FIG. 10A illustrates a top view of mask 48b, FIG. 10B is a bottom perspective view of mask 48b, and FIG. 10C is a cross-sectional side view along lines A-A of FIG. 10A of mask 48b. Mask 48b is formed with a plurality of spars 90, which connect a plurality of columns 92 to each other. The mask shown in FIG. 10A-C is one example of a mask design for masking internal features, e.g., in the case where internal features within the coated area of the CCM are required not to be coated with catalyst material. In one non-limiting aspect, the columns in the mask 48b are provided to inhibit the catalyst-containing ink from being deposited in regions where column inserts will be located. Thus, when catalyst ink is sprayed onto a masked surface, one or more columns may be disposed on MEA 29 where columns 92 prevent the catalyst ink from being applied onto the membrane in the region underneath the columns 92. The spar and column features of mask 48b may be created by a laser cutting device. Ideally, spars 90 are very thin (in the x, y and z directions) and have a gap underneath them allowing the ink jet nozzle 76 to spray catalyst-containing ink underneath the spar, in contrast to the region covered by the bottom surface of columns 92, which preferably rest upon the surface of membrane 8 and prevents the catalyst-containing ink from being deposited on the region of membrane thereunder.

Another possible mask 48c is shown in FIG. 10D. There are, as can be appreciated by those of ordinary skill in the art, a great many different mask designs that can be employed. Mask 48c may be used when it is desirable to have at least two different catalyst-containing inks applied to the same side of a single membrane 8. In this case, the application of the mask and spraying of catalyst-containing ink is a multiple step process (apply mask 48c; spray first catalyst-containing ink 44a; flip mask 48c by 180°, and spray second catalyst-containing ink 44b).

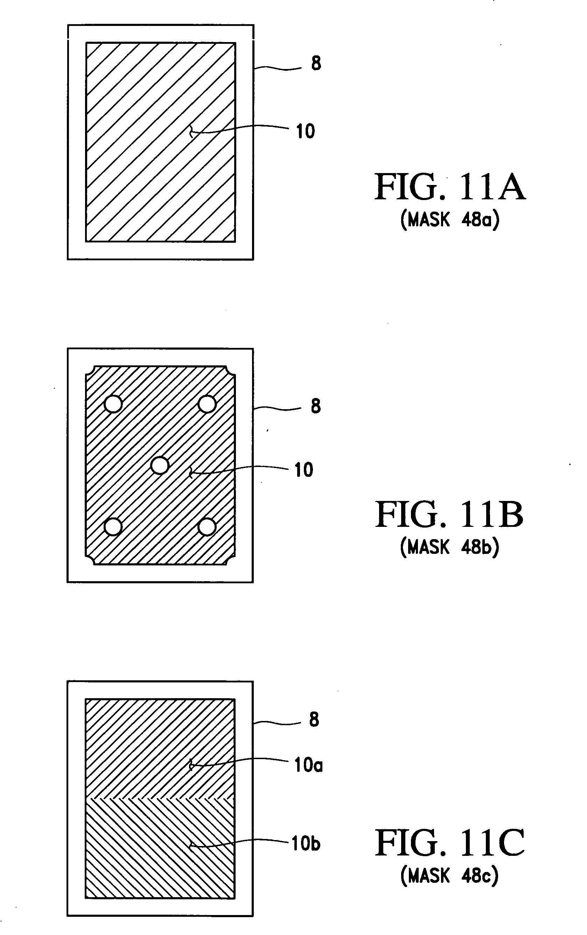

The results of spraying catalyst-containing ink 44 onto a membrane 8 with masks 48a, 48b, 48c, are shown in FIGS. 11A-C, respectively. In FIG. 11A, mask 48a causes catalyst layer 10 to be formed in the general shape of a rectangle. As illustrated in FIG. 11B, the column 92 locations where no catalyst-containing ink 44 was sprayed is evident, and in FIG. 11C, two different layers 10a, 10b are formed, each from a different ink.

Shown in all three masks 48a, 48b and 48c is a fiducial 88. Fiducial 88 is an example of an alignment structure, in this case a mark, that can be used by automated manufacturing equipment to determine a known location or reference point, so that other operations can occur based on known distances/locations from that fiducial. Alternatively, fiducial 88 can be an alignment opening for receiving alignment pins located on frame 60 (or, conversely, alignment pins for interacting with an alignment opening). According to a preferred embodiment of the invention, there would generally be at least two such alignment pins, though that is not always necessarily the case. As discussed above, mask 48 has an outer edge 49 that can be used to align the masks with frame 60, using frame inner edge 61 (See FIG. 8).

Reverting to FIG. 3B, in step 322, membrane 8, preferably with the cathode mask resting upon it, is sprayed with cathode catalyst-containing ink. Membrane 8 comprises a first major planar surface, upon which cathode catalyst-containing ink is sprayed, and a second major planar surface, upon which anode catalyst-containing ink is sprayed (in step 326). As discussed above, depending on its design, the cathode mask allows sprayed cathode catalyst-containing ink (which contains cathode catalyst particles) to be applied on some areas of the first major planar surface of membrane 8, and prevents cathode catalyst-containing ink from being applied on other areas of the first major planar surface of membrane 8. In step 324, the sprayed membrane 8 is flipped and aligned for spraying of the other side thereof. In step 326, depending on its design, the anode mask allows sprayed anode catalyst-containing ink (which contains anode catalyst particles) to be applied on some areas of the second major planar surface of membrane 8, and prevents anode catalyst-containing ink from being applied on other areas of the second major planar surface of membrane 8. Of course, as one skilled in the art would understand, the invention is not limited to the order of steps presented in the figures, and steps 322 and 326 may occur in either order or even simultaneously.

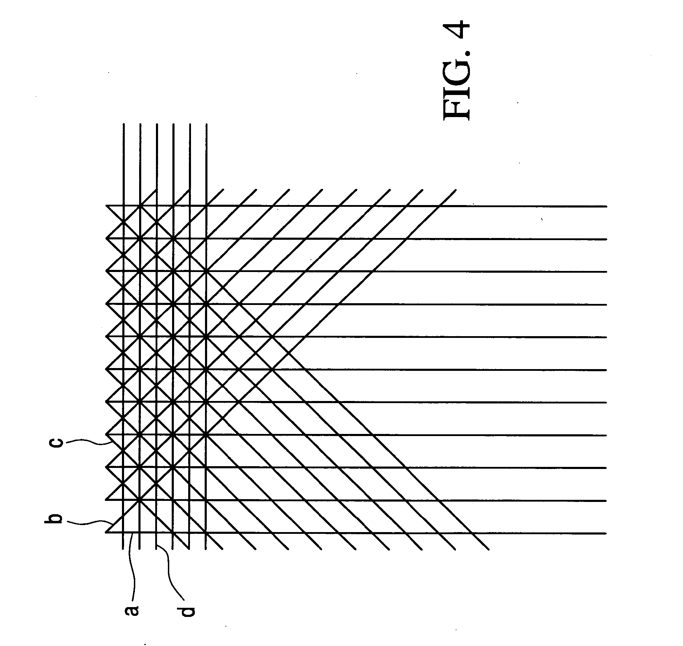

FIG. 4 illustrates a non-limiting exemplary spraying pattern according to one embodiment of the present invention. Other spraying patterns can also be used, as one of ordinary skill in the art of the present invention can appreciate. Spraying of cathode or anode catalyst-containing inks proceeds until a desired number of layers is deposited, for example, from about 3 to about 25 layers, e.g., from about 5 to about 20 layers or from about 7 to about 16 layers. In various optional embodiments, the anode and/or cathode catalyst-containing ink preferably is sprayed until a thickness of from about 10 to about 100 µm, e.g., from about 15 to about 75 µm or from about 20 to about 60 µm is achieved.

The spraying pattern illustrated in FIG. 4 is a delta spray configuration. As shown in FIG. 4, vertical lines "a" are substantially spaced equidistance apart. Each line "a" represents the center spray line of the sprayable anode or cathode catalyst-containing ink sprayed by the spray equipment. Lines "b" are at a 45° angle from line "a" in one direction, and lines "c" are at a 45° angle from line a in another direction. Finally, lines "d", which are horizontal lines, complete the delta shapes of the centerlines of the sprayable ink. According to exemplary embodiments of the present invention, lines "a" are spaced from about 3 to about 10 mm apart (depending, for example, on the spray area achieved with each pass of the spraying nozzle 34), as are lines "d". Lines "b" and "c", which in this instance are at a 45° angle with respect to lines "a", can also be applied at different angles, forming delta shapes with different MEA'surements, as one of ordinary skill in the art in the present invention can appreciate. Of course, lines a, b, c, and d may be printed in any order, and one or more of lines a, b, c, d or may be omitted.

FIGS. 5A-5E illustrate spraying of sprayable cathode or anode catalyst-containing ink on membrane 8 using spraying nozzle 34 according to an embodiment of the present invention. In FIG. 5A, an anode or cathode catalyst-containing ink is held in reservoir 30. The contents of reservoir 30 (anode or cathode catalyst-containing ink) are fed to spraying nozzle 34 via nozzle feed tube 32. The catalyst-containing ink comprises a plurality of catalyst particles (anode or cathode particles) 40, electrolyte (e.g., NATION®) particles 38 and vehicle 42. Particles 40 are optionally from about 1-30 µm in diameter and are suspended in vehicle 42, which, according to an exemplary embodiment of the present invention, comprises water. Exemplary processes for forming catalyst particles suitable for use in the catalyst inks are described, for example, in pending U.S. Patent Applications Serial Nos. 11/117,701, filed April 29, 2005; 11/328,147, filed January 10, 2006; and 11/335,729, filed January 20, 2006, the entireties of which are incorporated herein by reference. As they exit spraying nozzle 34, the catalyst-containing ink droplets preferably have all average droplet size ranging from about 10µm to about 100µm, e.g., from about 20µm to about 70µm or from about 30µm to about 50µm, preferably about 40 µm.

Spraying nozzle 34 sprays anode or cathode catalyst-containing ink that is fed to it in a finely controlled aerosol or mist spray. Membrane 8 is held, as discussed above, onto platen 64, which is preferably heated to a temperature, e.g., a temperature of from about 50 to about 80°C. As the catalyst-containing ink is forcibly ejected from nozzle 34, vehicle 42 substantially, partially or wholly evaporates, and, upon contacting the membrane 8 (or a previously applied catalyst layer), the catalyst particles 40 and electrolyte particles 38 adhere to the surface of membrane 8 as agglomerates 46. FIG. 5B illustrates a first droplet 36a as it is ejected from spraying nozzle 34. In droplet 36a electrolyte particles 38 and catalyst particles 40 are held together by vehicle 42. In FIG. 5C, some of vehicle 42 has evaporated, and the electrolyte particles 38 and catalyst particles 40 are more concentrated (closer together) within droplet 36b. In FIG. 5D, approximately 50% by weight of vehicle 42 has evaporated, and droplet 36c is very near to the surface of membrane 8. As the vehicle is fully removed, agglomerates 46 are formed on the membrane 8, which agglomerates comprise a porous mixture of electrolyte particles 38 and catalyst particles 40. FIG. 5E illustrates the formation of catalyst layer 6, 10 (anode or cathode) of the agglomerates 46 upon membrane 8. At this point, substantially all of vehicle 42 has evaporated.

According to an exemplary embodiment of the present invention, a sonicasting/recirculating system is used to improve the uniformity (dispersion) of the catalyst-containing ink and break-up any agglomerations in the catalyst-containing ink prior to spraying.

FIG. 6 illustrates a traditional carbon-supported catalyst droplet 52 comprising a plurality of carbon particles 50, held in suspension in a liquid carrier, usually water. The carbon particles 50 in the carbon catalyst droplet 52 form carbon catalyst structures 54 that are linear, tree-like shapes, as seen in FIG. 6. When deposited, the carbon catalyst structures dry on the surface of membrane 8 to form a dense layer of carbon catalyst. This type of carbon catalyst layer is less porous than the catalyst layers formed according to the present invention and not particularly efficient in oxidizing methanol, nor in passing the protons to membrane 8. Furthermore, because of the inherent non-spherical shape of the carbon catalyst structure 54, conventional carbon-supported catalyst particles are generally considered unsuitable for the spraying applications of the present invention.

FIGS. 7-10 illustrate several of the component assemblies for manufacturing MEA's according to various embodiments of the present invention. As discussed above, platen 64 preferably provides both heating and vacuum pressure to frame assembly 60, and hence membrane 8 and the masks (cathode, anode). Frame assembly 60 comprises an upper frame component 58 and a lower frame component 56, connected by a hinge 62. Of course, FIG. 7 is a simplified diagram only meant to illustrate the basic components of a MEA manufacturing system, and is not an exhaustive illustration of all the different types of devices that can accomplish identical functions. Thus, other means may be used to removably secure upper frame component 58 to lower frame component 56 (e.g., screws, etc.). Vacuum assembly 66 provides the vacuum pressure to keep frame assembly 60 in place, and AC/DC voltage source 68 provides the power to maintain platen 64 at a substantially constant temperature via heater coil and heater control assembly 67. Cathode and anode masks are alternatively placed onto membrane 8 within upper frame component 58 (see FIG. 8, which illustrates a top view of upper frame component 58). FIGS. 9 and 10 illustrate exemplary embodiments of cathode and anode masks respectively, as discussed above. Other designs for the cathode and anode masks can be used, of course.

As discussed above, steps 104 and 106 of process 100 shown in FIG. 2 comprise preparing and applying diffusion layers to each side of the CCM, in a process for manufacturing MEA's according to an embodiment of the present invention. Steps 328 through 336 of FIG. 3 pertain to step 104 of FIG. 2, and steps 340 through 348 pertain to step 106.

The preparation and application of gas diffusion layer 18 and liquid diffusion layer 16 are substantially similar. Therefore, for the purpose of brevity, the preparation and application of the gas diffusion layer 18 and liquid diffusion layer 16 shall be discussed below with reference generically to the application of "diffusion layers."

Following step 326, the assembly is referred to as a catalyst coated membrane (CCM) 28. CCM's 28 can be packaged and shipped to customers who want to apply their own diffusion layers. Alternatively, the CCM's may be manufactured into MEA's and packaged and shipped as MEA's. Thus, step 328 and 340, preparation (e.g., conditioning) of the diffusion layers occurs, if necessary. The material used to make diffusion layers can be obtained and pre-conditioned, if necessary or desired. Therefore, steps 328 and 340 are optional. The diffusion layers may be manufactured, for example, from either a cloth material impregnated with carbon (referred to as carbon-cloth, or C-cloth) or a piece of treated or untreated paper.

In steps 330 and 342 of FIGS. 3B and 3C, the conditioned diffusion layer material is cut into the desired shape with a laser. The laser cutter holds the diffusion layer material in place, and cuts the shapes according to precise tolerances, for example, ± 0.05 mm. Following cutting of the diffusion layer material into the desired shape, the cut pieces are loaded into trays, for attachment to CCM's 28.

In steps 334 and 346, an adhesive material is applied to the cut out diffusion layer pieces. Application of the adhesive material can be done, for example, in two different ways. According to a preferred embodiment, thermally setting adhesive is applied to a perimeter of the diffusion layer material. Then, in steps 336 and 348, the diffusion material with thermal adhesive is applied to CCM 28 on its cathode and anode sides, respectively. Once applied to the CCM, the gas diffusion layer material is referred to as a gas diffusion layer (GDL) 18, and the liquid diffusion layer material is referred to as a liquid diffusion layer (LDL) 16. According to another embodiment of the present invention, an electrolyte-containing ink (e.g., comprising NAFION® as the electrolyte) may be sprayed substantially over one entire side of the diffusion layer material prior to its placement on the cathode side of membrane 8. In this aspect, the electrolyte in the electrolyte-containing ink exhibits glue-like properties and secures the diffusion layer to the membrane. The spraying may occur with the same or different spraying nozzle used to apply the catalyst-containing ink to the membrane during CCM manufacturing.

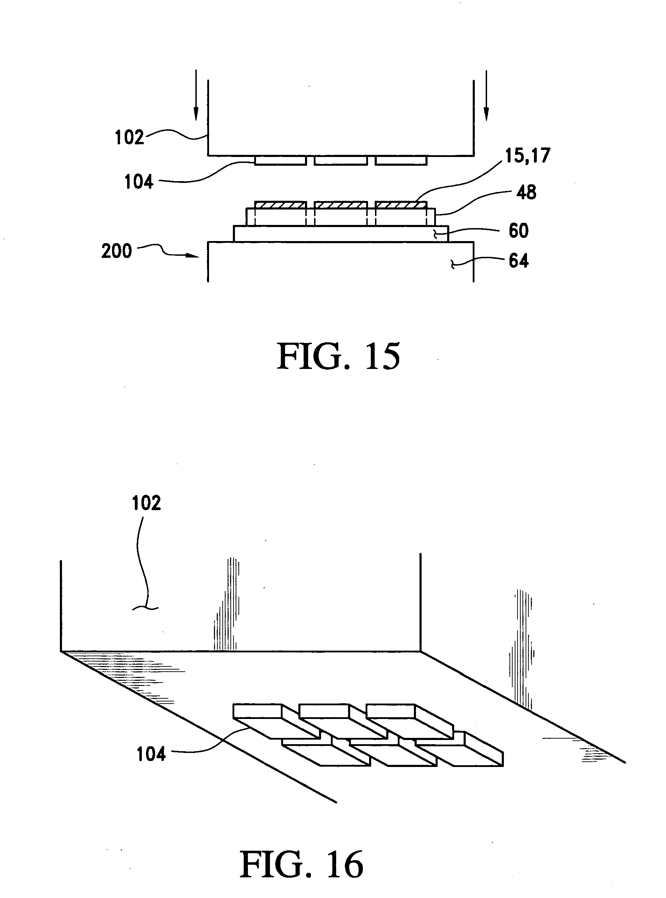

In step 338 of method 300, frame assembly 60 is lifted, flipped, and aligned again with platen 64 such that the anode side of membrane 8 is facing up. Then, steps 340, 342, 344, 346 and 348 occur (shown in FIG. 3C), as necessary, to apply liquid diffusion layer material to the anode side of membrane 8. As discussed above, the steps of the invention may occur in any logically possible order. Thus, application of the gas diffusion layer material to the membrane may occur before or after application of the liquid diffusion layer material to the membrane. In step 350, an optional MEA press operation occurs in which the diffusion layers are pressed onto the CCM. The press operation is described in more detail below with reference to FIGS. 15 and 16. A similar pressing operation may be employed, for example, in applying gaskets, which provide a seal between the MEA and the flow field of the stack. Following application of both the GDL 18 and LDL 16, CCM 28 is now referred to as a membrane electrode assembly (MEA) 29.

The process described above can be automated, or performed manually. According to a preferred embodiment of the present invention, the process of applying the diffusion layer materials is performed automatically, with robots and other computer controlled machines performing substantially all of the process steps. In that circumstance, method 300 can optionally prepare one or a plurality of MEA's 29 at a time. In the latter instance, efficiencies of scale are realized, as is well known to those familiar with the art of manufacturing processes. In this latter case, certain different options may also occur, and these will now be discussed in greater detail.

As discussed above, in steps 336 and 348, gas diffusion layer material (GDL) 17 and liquid diffusion layer material (LDL) 15 was first coated (either selectively, or wholly) with an adhesive material, and then applied to a cathode and anode side, respectively. In the case of a large scale automated manufacturing process, wherein multiple MEA's 29 will be manufactured at one time, this process (as well as steps 330, 332, 334, 342, 344, and 346) may be slightly modified. Instead of only one piece of diffusion layer, multiple pieces can be treated at once. FIGS. 12 through 16 illustrate the process and tools for automated manufacturing of a plurality of MEA's 29 according to an embodiment of the present invention.

FIG. 12 illustrates a top perspective view of a tray 94 used to store liquid diffusion layer material (LDLM) 15 or gas diffusion layer material (GDLM) 17 following conditioning, cutting, and application of adhesive, and prior to insertion onto CCM 28. FIG. 13B illustrates MEA frame assembly 200, wherein platen 64 is shown holding frame 60 upon it, and within frame 60 resides either cathode or anode mask 48, 70. It is possible, as one of ordinary skill in the art can appreciate, that in the case of manufacturing MEA's 29 that are substantially symmetrical on both the anode and cathode sides, that only one mask is necessary in the manufacturing process.

FIG. 13A illustrates an alignment jig 96 (for application of either or both the GDLM and/or LDLM) prior to insertion onto CCM 28, which is held in place by frame 60 on top of platen 64. The alignment jig 96 has a plurality of alignment jig openings 98, within which fit GDLMs 17 and/or LDLMs 15. According to an exemplary embodiment of the present invention, an automated machine transfers the alignment jig 96 onto CCM 28, which is held in place by frame 60. Alignment jig 96 in this embodiment of the present invention fits within mask 48, as shown in FIG. 13C.

According to an alternative embodiment of the present invention (not shown), the mask can be removed prior to insertion of the alignment jig 96 and then the alignment jig 96 fits within frame 60. Whether the alignment jig 96 fits within frame 60 or the mask depends on the design of the MEA. According to the embodiments of the present invention illustrated in FIGS. 13A-C, alignment jig openings 98 are spaced evenly about CCM 28. Within each alignment jig opening 98 one LDLM 15 or GDLM 17 will be placed. In other aspects, the alignment jig 96 may be aligned with the CCM by various other alignment means, such as those described above (e.g., peg and hole, etc.).

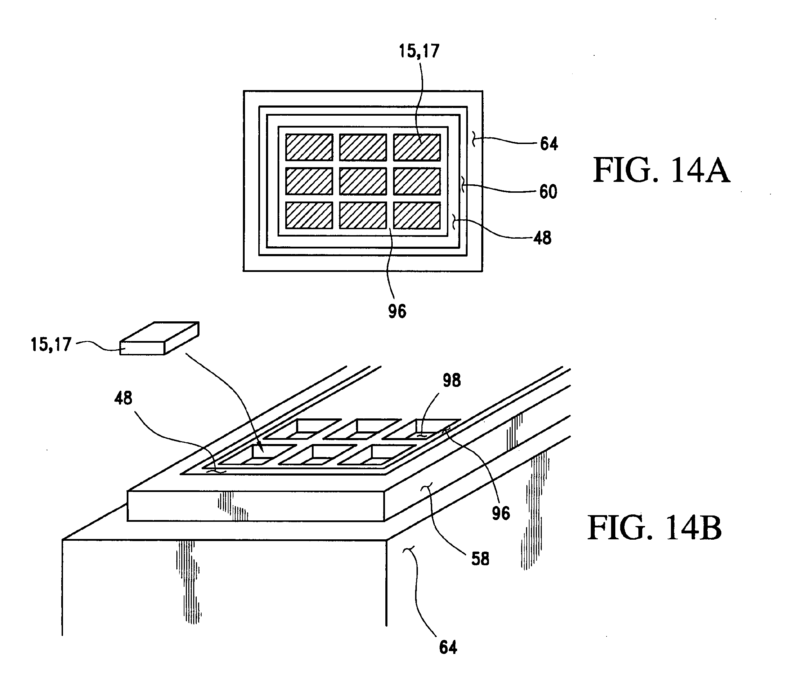

In FIG. 14A, diffusion material pieces (LDLM 15 and GDLM 17) have been inserted or placed into alignment jig openings 98. FIG. 14A illustrates this placement operation from a top perspective view. FIG. 15 illustrates a side view of frame assembly 200 with either LDLM 15 or GDLM 17 pieces placed into alignment jig openings 98, and with the MEA pressing operation, step 350 of method 300, about to occur. In MEA press operation step 350, diffusion material press (press) 102 optionally with press blocks 104 is pressed down onto MEA frame assembly 200 and the diffusion material pieces to press the diffusion material pieces into place using a prescribed pressure. Although such operation can occur manually, MEA press operation 350 preferably occurs automatically according to a preferred embodiment of the present invention. FIG. 16 illustrates a bottom perspective view of press 102. Following the securing of LDLMs 15 or GDLMs 17 (whichever is being applied), the alignment jig 96 is removed.

Method 300 illustrates and describes the process for manufacturing CCM 28 and subsequently manufacturing or forming MEA 29. In the aforementioned process, as shown in steps 328-336, and 340-348, the GDLM 17 and then LDLM 17 are secured to their respective sides of CCM 28, and then, as described above, secured in a single pressing step 350. According to an alternative embodiment of the present invention, multiple pressing steps may be employed, e.g., one for each side of the CCM. In this process, for example, an alignment jig can be aligned with the first major planar surface (i.e., the cathode side of CCM 28), and multiple GDLM's 17 are inserted into the alignment jig 96 openings 98. Then, MEA press 102 is used to press GDLM's 17 onto CCM 28. The alignment jig 96 is then removed, and optionally, the CCM (having the first diffusion layer secured to it) is flipped over. The process can then be repeated for the anode side of the CCM, using the same or different alignment jig 96. LDLM's 15 are inserting into the openings in the same or different alignment jig and placed onto the second major planar surface of CCM 28 (i.e., the anode catalyst layer). A second pressing operation is then performed on inserted LDLM's 15 using press 102. Following the second pressing step, the alignment jig 96 is removed. A single alignment jig optionally may be used for both the first and second pressing operations, or different alignment jigs may be used.

Following step 350 (which is optionally repeated from both anode and cathode sides of CCM 28), MEA 29 is formed. Then, in optional step 352 post-conditioning occurs. According to a preferred embodiment of the present invention, post-conditioning comprises bathing the CCM (i.e., within the formed MEA) at an elevated temperature in a first bath comprising either or both water and acid, optionally at an elevated temperature. Post-conditioning preferably removes potential contaminates left from the ink vehicle or process handling. According to an alternative embodiment of the present invention, post-conditioning also comprises alternating baths of distilled water and sulfuric acid.

In step 354, each MEA is cut with a laser to ensure accurate dimensions, and then retrieved and placed into another tray. In step 356, each MEA is inspected, or randomly selected according to established inspection quality standards (i.e., six-sigma (6σ) ISO 9000 quality standards) and in step 358, the inspected MEA's are packaged. In step 360, the packaged MEA's 29 are shipped.

According to a preferred embodiment of the present invention, the process for forming a plurality of MEA's 29 is performed by software-driven, fully automated manufacturing devices, including, for example, pick-and-place robots. According to an alternative embodiment of the invention, the method for forming a plurality of MEA's can be a combination of manual and automated processes, wherein the automated processes, in either the fully or partial automated process, comprise the steps of inserting the plurality of first and second diffusion layer materials (i.e., GDLM 17, LDLM 15) into openings 98 on alignment jig 96.

Any of the steps of the processes of the present invention and those that follow that involve the movement of materials, the application of inks, and in general the entire process, can be performed manually, or automatically, or some combination of the two, even on a step-by-step process. For example, in step 322 discussed above, the application of cathode catalyst-containing ink 44 can be accomplished by a technician using a spray gun, or it can be accomplished by a robot-machine that follows instructions pre-programmed into it to spray the fluid on the membrane surface. Additionally, the steps may be performed in any order so long as the order is logically possible.

The present invention has been described with reference to certain exemplary embodiments thereof. However, it will be readily apparent to those skilled in the art that it is possible to embody the invention in specific forms other than those of the exemplary embodiments described above. This may be done without departing from the scope of the invention. The exemplary embodiments are merely illustrative and should not be considered restrictive in any way. The scope of the invention is defined by the appended claims and their equivalents, rather than by the preceding description.

## Claims

1. A process for forming a plurality of membrane electrode assemblies (29), comprising:
(a) pre-conditioning a proton-conducting membrane (18) having a first major planar surface and an opposing second major planar surface;
(b) framing the membrane in a substantially rigid frame (60) to form a framed membrane;
(c) spraying an anode catalyst ink onto the first major planar surface to form an anode catalyst layer (6) thereon;
(d) spraying a cathode catalyst ink onto the second major planar surface to form a cathode catalyst layers (10) thereon;
(e) aligning a first diffusion layer alignment jig (96) with the first major planar surface of the framed catalyst coated membrane, wherein the first diffusion layer alignment jig (96) comprises a plurality of openings (98) configured for receiving a plurality of first diffusion layers (16);
(f) inserting the plurality of first diffusion layers (16) into the openings (98);
(g) securing the inserted plurality of first diffusion layers to the anode catalyst layer (6); and
(h) removing the first diffusion layer alignment jig (96).

2. The process of claim 1, wherein the process further comprises:
(i) aligning a second diffusion layer alignment jig (96) with the second major planar surface of the framed catalyst coated membrane, wherein the second diffusion layer alignment jig (96) comprises a plurality of openings (98) configured for receiving a plurality of second diffusion layers (18);
(j) inserting the plurality of second diffusion layers (18) into the openings (98);
(k) securing the inserted plurality of second diffusion layers to the cathode catalyst layer (10); and
(l) removing the second diffusion layer alignment jig (96).

3. The process of claim 2, wherein the framed proton-conducting membrane is removably secured to a vacuum-controlled platen during the spraying steps and during the securing steps.

4. The process of claim 2, wherein the process further comprises:
(m) separating the plurality of membrane electrode assemblies from one another.

5. The process of claim 2, wherein the step of pre-conditioning comprises bathing the membrane electrode assemblies at an elevated temperature in a first bath comprising either both water at an elevated temperature and an acid, water at an elevated temperature, or an acid.

6. The process of claim 2, wherein the process further comprises:
(m) post-conditioning the membrane electrode assemblies to render them suitable for use in a fuel cell, wherein the post-conditioning comprises bathing the proton-conducting membranes in a first bath comprising either both water at an elevated temperature and an acid, water at an elevated temperature, or an acid.

7. The process of claim 2, wherein the process is automated.

8. The process of claim 2, wherein steps (f) and (j) are performed by a pick-and-place robot.

## Patentansprüche

1. Ein Verfahren zur Bildung einer Vielzahl von Membranelektrodenbaugruppen (29), enthaltend:
(a) Vorkonditionieren einer protonenleitenden Membran (18) mit einer ersten ebenen Hauptoberfläche und einer gegenüberliegenden zweiten ebenen Hauptoberfläche,
(b) Rahmen der Membran in einem im Wesentlichen starren Rahmen (60), um eine gerahmte Membran zu bilden;
(c) Sprühen einer Anodenkatalysatortinte auf die erste ebene Hauptoberfläche, um darauf eine Anodenkatalysatorschicht (6) zu bilden;
(d) Sprühen einer Kathodenkatalysatortinte auf die zweite ebene Hauptoberfläche, um darauf eine Kathodenkatalysatorschicht (10)zu bilden;
(e) Ausrichten einer ersten Diffusionsschichtausrichtungsschablone (96) mit der ersten ebenen Hauptoberfläche der gerahmten katalysatorbeschichteten Membran, worin die erste Diffusionsschichtausrichtungsschablone (96) eine Vielzahl von Öffnungen (98) enthält, die zur Aufnahme einer Vielzahl von ersten Diffusionsschichten (16) konfiguriert sind;
(f) Einbringen der Vielzahl erster Diffusionsschichten (16) in die Öffnungen (98);
(g) Sichern der eingebrachten Vielzahl von ersten Diffusionsschichten an der Anodenkatalysatorschicht (6); und
(h) Entfernen der ersten Diffusionsschichtausrichtungsschablone (96).

2. Das Verfahren des Anspruchs 1, worin das Verfahren weiterhin enthält:
(i) Ausrichten einer zweiten Diffusionsschichtausrichtungsschablone (96) mit der zweiten ebenen Hauptoberfläche der gerahmten katalysatorbeschichteten Membran, worin die zweite Diffusionsschichtausrichtungsschablone (96) eine Vielzahl von Öffnungen (98) enthält, die zur Aufnahme einer Vielzahl von zweiten Diffusionsschichten (18) konfiguriert sind;
(j) Einbringen einer Vielzahl von zweiten Diffusionsschichten (18) in die Öffnungen (98);
(k) Sichern der eingebrachten Vielzahl von zweiten Diffusionsschichten an der Kathodenkatalysatorschicht (10); und
(l) Entfernen der zweiten Diffusionsschichtausrichtungsschablone (96).

3. Das Verfahren des Anspruchs 2, worin die gerahmte protonenleitende Membran während der Sprühschritte und während der Sicherungsschritte lösbar an einer vakuumkontrollierten Trägerplatte gesichert ist.

4. Das Verfahren des Anspruchs 2, worin das Verfahren weiterhin enthält:
(m) Trennen der Vielzahl von Membranelektrodenbaugruppen voneinander.

5. Das Verfahren des Anspruchs 2, worin der Vorkonditionierungsschritt das Baden der Membranelektrodenbaugruppen bei einer erhöhten Temperatur in einem ersten Bad, enthaltend entweder sowohl Wasser bei einer erhöhten Temperatur und eine Säure, Wasser bei einer erhöhten Temperatur oder eine Säure, umfasst.

6. Das Verfahren des Anspruchs 2, worin das Verfahren weiterhin enthält:
(n) Nachkonditionieren der Membranelektrodenbaugruppen, um sie zur Verwendung in einer Brennstoffzelle geeignet zu machen, worin die Nachkonditionierung das Baden der protonenleitenden Membranen in einem ersten Bad, enthaltend entweder sowohl Wasser bei einer erhöhten Temperatur und eine Säure, Wasser bei einer erhöhten Temperatur oder eine Säure, umfasst.

7. Das Verfahren des Anspruchs 2, worin das Verfahren automatisiert ist.

8. Das Verfahren des Anspruchs 2, worin die Schritte (f) und (j) von einem Pick-and-Place-Roboter ausgeführt werden.

## Revendications

1. - Procédé de formation d'une pluralité d'ensembles électrodes à membrane (29), comprenant :
(a) le pré-conditionnement d'une membrane conduisant les protons (28) ayant une première surface majeure plane et une seconde surface majeure plane opposée ;
(b) l'encadrement de la membrane dans un cadre sensiblement rigide (60) pour former une membrane encadrée ;
(c) la pulvérisation d'une encre à catalyseur anodique sur la première surface majeure plane pour former une couche de catalyseur anodique (6) sur celle-ci ;
(d) la pulvérisation d'une encre à catalyseur cathodique sur la seconde surface majeure plane pour former une couche de catalyseur cathodique (10) sur celle-ci ;
(e) l'alignement d'un premier montage d'alignement de couches de diffusion (96) avec la première surface majeure plane de la membrane encadrée revêtue de catalyseur, le premier montage d'alignement de couches de diffusion (96) comprenant une pluralité d'ouvertures (98) configurées pour recevoir une pluralité de premières couches de diffusion (16) ;
(f) l'introduction des différentes premières couches de diffusion (16) dans les ouvertures (98) ;
(g) la fixation des différentes premières couches de diffusion introduites à la couche de catalyseur anodique (6) ; et
(h) le retrait du premier montage d'alignement de couches de diffusion (96).

2. - Procédé selon la revendication 1, le procédé comprenant en outré :
(i) l'alignement d'un second montage d'alignement de couches de diffusion (96) avec la seconde surface majeure plane de la membrane encadrée revêtue de catalyseur, le second montage d'alignement de couches de diffusion (96) comprenant une pluralité d'ouvertures (98) configurées pour recevoir une pluralité de secondes couches de diffusion (18) ;
(j) l'introduction des différentes secondes couches de diffusion (18) dans les ouvertures (98) ;
(k) la fixation des différentes secondes couches de diffusion introduites à la couche de catalyseur cathodique (10) ; et
(l) le retrait du second montage d'alignement de couches de diffusion (96).

3. - Procédé selon la revendication 2, dans lequel la membrane conduisant les protons encadrée est fixée de manière amovible à un plateau commandé par dépression durant les étapes de pulvérisation et durant les étapes de fixation.

4. - Procédé selon la revendication 2, le procédé comprenant en outré :
(m) la séparation de la pluralité d'ensembles électrodes à membrane les uns des autres.

5. - Procédé selon la revendication 2, dans lequel l'étape de pré-conditionnement comprend le bain des ensembles électrodes à membrane à une température élevée dans un premier bain comprenant soit à la fois de l' eau à une température élevée et un acide, soit de l'eau à une température élevée, soit un acide.

6. - Procédé selon la revendication 2, le procédé comprenant en outré :
(m) le post-conditionnement des ensembles électrodes à membrane pour les rendre appropriés pour une utilisation dans une pile à combustible, le post-conditionnement comprenant le bain des membranes conduisant les protons dans un premier bain comprenant soit à la fois de l'eau à une température élevée et un acide, soit de l'eau à une température élevée, soit un acide.

7. - Procédé selon la revendication 2, le procédé étant automatisé.

8. - Procédé selon la revendication 2, dans lequel les étapes (f) et (j) sont réalisées par un robot de transfert.
